# EUROPÄISCHE PATENTSCHRIFT

(11) **EP 0 960 152 B1**
(45) Veröffentlichungstag und Bekanntmachung des Hinweises auf die Patenterteilung: **31.07.2002**
(21) Anmeldenummer: 98909437.0
(22) Anmeldetag: 11.02.1998
(51) Int. Cl.: C08G 63/78, C08G 63/81, C09D 5/03

(54) **KUGELFÖRMIGE, GEGEBENENFALLS BEI NIEDRIGEN TEMPERATUREN VERNETZBARE POLYESTERPARTIKEL, VERFAHREN ZU DEREN HERSTELLUNG SOWIE DEREN VERWENDUNG FÜR PULVERLACKE**
BALL-SHAPED POLYESTER PARTICLES CAPABLE OF CROSSLINKING AT LOW TEMPERATURE, PRODUCTION THEREOF AND USE OF SAME FOR POWDER LACQUERS
PARTICULES DE POLYESTER DE FORME SPHERIQUE, EVENTUELLEMENT RETICULABLES A BASSE TEMPERATURE, MODE DE FABRICATION ET APPLICATION POUR LES LAQUES EN POUDRE

(30) Priorität: 17.02.1997 DE 19705961
(43) Veröffentlichungstag der Anmeldung: 01.12.1999
(73) Patentinhaber: E.I. du Pont de Nemours & Company, Wilmington, Delaware 19898 (US)
(72) Erfinder: BLATTER, Karsten, D-65817 Eppstein (DE); SIMON, Peter, D-65817 Eppstein (DE)
(74) Vertreter: Biering, Christine
(86) Internationale Anmeldenummer: EP9800747
(87) Internationale Veröffentlichungsnummer: WO9836010

(56) Entgegenhaltungen:
- EP-A- 0 751 166

## Beschreibung

Die vorliegende Erfindung betrifft kugelförmige Polyesterpartikel mit Partikelgrößen < 50 µm, die gegebenenfalls bei Temperaturen < 200°C vernetzbar sind, ein Verfahren zu deren Herstellung und ihre Verwendung für Pulverlacke.

Transparente Pulverlacke bestehen in der Regel aus einem gegebenenfalls vernetzbaren, filmbildenden Polymer, sowie Additiven wie z.B. Fließverbesserern oder Entgasungshilfsmitteln.

Pulverlacke werden traditionell hergestellt, indem man die oben genannten Komponenten in einem Extruder bei einer Temperatur oberhalb der Erweichungstemperatur des filmbildenden Polymers, aber unterhalb der Vernetzungstemperatur, intensiv vermischt und das resultierende Extrudat anschließend durch einen Mahlprozeß auf eine mittlere Korngröße von ca. 40 bis 70 µm bringt. Der Mahlprozeß führt zu Pulvern mit irregulärer Struktur, die dazu führt, daß Pulver mit einer mittleren Partikelgröße von deutlich weniger als 30 µm nicht mehr nach dem in der Pulverlackverarbeitung üblichen elektrostatischen Sprühverfahren verarbeitet werden können. Beispielsweise wird in EP-A-0 459 048 erwähnt, daß sich Pulverlackzusammensetzungen mit einer Partikelgröße von weniger als 15 µm nicht nach dem elektrostatischen Sprühverfahren verarbeiten lassen.

Die im Stand der Technik verwendeten Mahlpulver haben einen mittleren Partikeldurchmesser von etwa 40 bis 70 µm und ergeben typischerweise eine Beschichtungsdicke von 40 bis 70 µm. Die Mahltechnologie erzeugt prinzipiell eine sehr breite Partikelgrößenverteilung. Zusätzlich beobachtet man eine Verbreiterung dieser Verteilung mit zunehmender Feinheit der Pulver.

Zur Charakterisierung der Breite einer Partikelgrößenverteilung werden neben der Größe d50, für die gerade 50 % der Partikel größer bzw. kleiner als der Wert d50 sind, noch zwei weitere Größen herangezogen: Mit d10 wird die Partikelgröße bezeichnet, für die 10% der Partikel kleiner als dieser Grenzwert sind. Entsprechend bezeichnet man mit d90 die Partikelgröße, für die 90% der Partikel feiner als der Wert d90 sind. Zur Charakterisierung der Breite einer Partikelgrößenverteilung wird in der Regel ein Quotient gebildet, der als Span bezeichnet wird und nach folgender Formel berechnet wird: Span= d90-d10/d50. Es gilt: je kleiner der Span, desto enger die Partikelgrößenverteilung. Ein Pulver aus identischen Kugeln hätte einen Span von 0. Für Mahlpulver mit einer mittleren Partikelgröße d50 von 50 µ wird typischerweise ein Span von 3 - 4 erhalten.

Aufgrund von ökonomischen Überlegungen (geringerer Materialverbrauch) aber auch aufgrund von technischen Vorteilen (höhere Flexibilität der Beschichtung) ist eine geringere Schichtdicke für Pulverlacke wünschenswert.

Es hat daher in der Vergangenheit nicht an Versuchen gefehlt, durch neue Technologien eine Reduktion der Partikelgröße von Pulverlacken zu erzielen, ohne daß die oben erwähnten Nachteile in der Verarbeitbarkeit der Pulver auftreten. Ziel ist in der Regel, Partikel mit einer möglichst perfekten Kugelform herzustellen, da solche Pulver ein wesentlich günstigeres Fließverhalten zeigen als die irregulären Mahlpulver. Beispielsweise wurde versucht, durch Versprühung von Polymerschmelzen möglichst kugelförmige Partikel herzustellen. Die in WO 92/00342 dargestellten Ergebnisse zeigen allerdings, daß dies nur mit mäßigem Erfolg gelingt. Die nach dieser Technik erhaltenen Partikel haben zwar im Vergleich zu Mahlpulvern eine glattere Oberfläche, von der Idealstruktur einer Kugel sind sie aber noch weit entfernt.

Ein weiteres Verfahren, das für die Herstellung von kugelförmigen Partikeln untersucht wurde, ist die Versprühung von Polymeren aus überkritischer Lösung, wie z.B. in EP-A- 0 661 091 oder EP-A- 0 792 999 beschrieben. Auch dieses Verfahren hat wesentliche Nachteile. Beispielsweise wird in den zitierten Anmeldungen festgestellt, daß aufgrund der schlagartigen Verdampfung des überkritischen "Lösungsmittels" ein Pulver erhalten wird, das eine poröse Struktur aufweist. Werden diese Pulver zur Herstellung von Filmen eingesetzt, so kommt es im Vergleich zu nicht porösen Pulvern vermehrt zur Blasenbildung und damit zu Defekten in der Beschichtung, da aufgrund der porösen Struktur eine große Menge Gas im Pulver eingeschlossen ist, das während des Filmbildungsvorgangs entfernt werden muß. Die Verwendung von überkritischen Lösungsmitteln ist zusätzlich technisch aufwendig, da beispielsweise unter hohen Drücken gearbeitet werden muß.

Ein prinzipiell anderes Verfahren zur Erzeugung kugelförmiger Partikel ist die Erzeugung einer Dispersion. Aufgrund physikalischer Gesetzmäßigkeiten ist in einer Dispersion die perfekte Kugelform die bevorzugte Geometrie der erhaltenen Teilchen. Es hat daher in der Vergangenheit nicht an Versuchen gefehlt, Polymerpartikel, die sich als Bindemittel in Lacksystemen, bevorzugt in sogenannten "high solid" Flüssiglacksystemen, einsetzen lassen, durch Herstellung in Dispersion zu erhalten (Keith. Barett, Dispersion Polymerization in Organic Media, John Wiley & Sons, London, 1975). Beispielsweise beschreibt GB 1 373 531 die Herstellung stabiler Dispersionen von Polykondensationspolymeren wie z.B. Polyester.

Die Möglichkeit der Verwendung der Polymerpartikel aus nichtwässrigen Dispersionsverfahren, insbesondere auf Basis Polyester, als Pulverlack wird in DE-C- 21 52 515 erwähnt. Hier wird ein bereits fertiges Polymer bei einer Temperatur < 200°C in Dispersion gebracht und durch Zugabe von Pigmenten, teilweise bei Raumtemperatur, eine Anfärbung erreicht. Allerdings werden die erhaltenen Partikel als weitestgehend sphärische "Aggregate" aus primären Polymerteilchen und Pigmentpartikeln beschrieben. Die Isolierung des Materials durch Sprühtrocknung führt offenbar zu größeren Gebilden, die durch mechanische Zerkleinerung wieder in ein feines Pulver überführt werden mußten. Als Korngröße wird nach der Zerkleinerung der zunächst gebildeten Agglomerate ein Bereich von ca. 2 bis 50 µm angegeben, allerdings fehlen Angaben über die mittlere Korngröße oder die Korngrößenverteilung völlig. Es werden auch keine Wege aufgezeigt, wie Pulverlacksysteme hergestellt werden können, die bei den gewünschten tiefen Temperaturen zwischen 120 und 200°C vernetzen. Bei den erwähnten vernetzenden Systemen werden nur solche Systeme eingesetzt, deren Vernetzungstemperatur oberhalb der Temperatur liegt, die zur Dispergierung benötigt wird.

Der in DE-C-21 52 515 beschriebene Einsatz eines bereits zu hohen Molekulargewichten kondensierten Polymers als Ausgangsprodukt für die Dispersionsherstellung hat außerdem folgende Nachteile: Durch die bereits beträchtliche Viskosität der Polymere ist es schwierig, eine gute Zerteilung der Schmelze zu erzielen und eine homogene Partikelgrößenverteilung zu erhalten. Es müssen in der Regel sehr hohe Temperaturen verwendet werden, um die Viskosität des Polymers ausreichend abzusenken. Übliche flür den Einsatz als Pulverlacke verwendete kommerzielle Polyester haben bei 200°C eine Viskosität im Bereich von 3000 bis 20.000 mPas.

Die EP-A 0 751 166 beschreibt ein Verfahren zur Herstellung von Polyestem und Copolyestern durch Polykondensation von oligomeren Dicarbonsäure-Diol-Vorkondensaten bei erhöhten Temperaturen in Wärmeträgerölen mit einem Siedebereich von bis zu 320°C. Insbesondere werden hierbei hochmolekulare Polymere hergestellt, wobei insbesondere Teilchengrößen < 500µm entstehen. Für die Dispersionsherstellung werden bei diesen Verfahren bereits zu relativ hohen Molekulargewichten kondensierte Oligoester eingesetzt und es ist schwierig, eine gute Zerteilung der Schmelze und eine homogene Partikelgrößenverteilung zu erhalten. Um diese Nachteile zu umgehen, müssen sehr hohe Temperaturen angewandt werden, um die Viskosität des Polymers zu senken. Diese hochmolekulare Polymere sind nicht für Applikation als Pulverlack geeignet, die bei niedrigen Temperaturen einen Lacküberzug ergeben. Ebenso weisen die entsprechend hergestellten Polymere die für die Verwendung als Pulverlack wichtigen Merkmale einer monomodalen engen Partikelgrößenverteilung nicht auf.

Aufgabe der vorliegenden Erfindung ist es somit, kugelförmige Polymerpartikel mit einer möglichst kleinen mittleren Partikelgröße und einer engen Partikelgrößenverteilung bereitzustellen, die bereits bei niedrigen Temperaturen zu einem kontinuierlichen Überzug verarbeitet werden können, gegebenenfalls bei diesen Temperaturen vernetzbar sind und sich für die Verwendung in Pulverlacken eignen.

Die vorliegende Erfindung löst diese Aufgabe und betrifft kugelförmige, transparente, nicht poröse, gegebenenfalls vernetzbare Partikel mit einer mittleren Partikelgröße von weniger als 50 µm und einer monomodalen Partikelgrößenverteilung mit einem Span (d90-d10/d50) von weniger als 2,5, die bei Temperaturen < 200°C zu einem kontinuierlichen Überzug aufgeschmolzen werden können sowie ein Verfahren zu deren Herstellung und deren Verwendung für Pulverlacke.

Die erfindungsgemäßen kugelförmigen, transparenten, gegebenenfalls vernetzbaren Polyesterpartikel werden hergestellt indem man
a. die Ausgangsstoffe für ein Polyesterbindemittel in einem inerten hochsiedenden Wärmeträger bei einer Temperatur, die mindestens so hoch ist wie die Erweichungstemperatur der Ausgangsstoffe in Gegenwart mindestens eines polymeren, vorzugsweise organischen, Dispersionsstabilisators dispergiert und
b. anschließend die Reaktionsmischung auf eine Temperatur im Bereich von 120 bis 250°C, unter gleichzeitiger Abführung der Kondensationsnebenprodukte, erhitzt, bis der Polyester das gewünschte Molekulargewicht besitzt;
c. die Reaktionsmischung im Falle eines vernetzbaren funktionellen Polyesters danach auf eine Temperatur im Bereich von 60 bis 140 °C abkühlt und mindestens ein mehrfunktionelles Vernetzungsmittel oder Epoxid zugibt und
d. anschließend die Temperatur in einen Bereich, der unterhalb der Erweichungstemperatur des Polyesters liegt absenkt und die erhaltenen kugelförmigen Polyesterpartikel abtrennt.

Als Ausgangsstoffe werden Oligoester mit einer Viskosität von weniger als 1000 mPas (gemessen bei 200 °C), insbesondere ≤ 500 mPas, eingesetzt, die Einheiten der Formeln (1) und (2) enthalten,

-CO-X-CO (1)

-O-D-O- (2)

wobei
X für einen substituierten oder unsubstituierten C₆ bis C₁₄-aromatischen Rest oder einen Akylen- Polymethylen- Cycloalkan- Dimethylen-cycloalkangruppe oder eine geradkettige oder verzweigte, ggf. ungesättigte Alkandiyl-Gruppe steht und
D eine Alkylen-, Polymethylen-, Cycloalkan-, Dimethylen-cycloalkangruppe oder eine geradkettige oder verzweigte, gegebenenfalls ungesättigte Alkandiyl-Gruppe bedeutet.

Es wird aus Gründen der Zeitersparnis bevorzugt, zunächst in der Schmelze Oligoester der oben beschriebenen Zusammensetzung herzustellen, indem man die Carbonsäurekomponenten, wie z.B. Terephthalsäure, Isophthalsäure, Adipinsäure oder Fumarsäure, um nur einige zu nennen, in Form der Säure oder als niedermolekulare Alkylester zusammen mit den Diolkomponenten, wie z.B. Ethylenglycol, Diethylenglycol, Neopentylglycol oder bis-Hydroxymethylcyclohexan, in der Schmelze in Gegenwart eines Umesterungkatalysators, wie z.B. Manganacetat oder Zink- oder Zinnsalzen erhitzt, bis der größte Teil der Kondensationsprodukte Wasser bzw. der niedrigen Alkanole abdestilliert ist. Dabei wird aber kein signifikanter Anstieg der Viskosität der Schmelze festgestellt. Bei 200 °C ist die Viskosität immer < 1000 mPas.

Ein solches Oligomerengemisch kann z.B. direkt bei erhöhter Temperatur durch Vereinigung mit Wärmeträgeröl und Dispergator in eine erfindungsgemäße Dispersion überführt werden. Dieses Verfahren ist für eine großtechnische Herstellung bevorzugt. Es ist aber auch möglich, das Oligomerengemisch zur Lagerung abzukühlen und später wieder aufzuheizen. Generell ist es auch möglich, bereits die Herstellung der Oligomeren in der Dispersion durchzuführen.

In einer praktischen Ausführungsform des erfindungsgemäßen Verfahrens werden die Ausgangsstoffe, bevorzugt als Oligomerengemisch, in Schritt (a) in einem inerten hohsiedenden Wärmeträger gemischt, die Mischung auf eine erhöhte Temperatur, die oberhalb der Erweichungstemperatur der Ausgangsstoffe liegen muß, zweckmäßiger Weise im Bereich von 150 bis 250°C, erhitzt und dann mindestens ein Dispersionsstabilisator oder ein Dispersionsstabilisator-Gemisch eingerührt.

Als Wärmeträger (Dispersionsmedium) haben sich aliphatische Wärmeträgeröle mit einem Siedepunkt im Bereich von 150 und 300°C als besonders geeignet erwiesen. Solche Wärmeträgeröle sind -im technischen Sinne- frei von aromatischen Baugruppen, d.h. sie enthalten maximal 2 Gew.%, vorzugsweise maximal 1 Gew.%, aromatische Bestandteile.
Aufgrund der geringen Polarität dieser Öle, die beispielsweise von der Exxon Chemical unter dem Handelsnamen ®Isopar, ®Exxsol oder ®Norpar angeboten werden, werden die Polyester nicht angequollen. Dieses Problem tritt teilweise für aromatische Öle auf, die prinzipiell für das Dispersionsverfahren gleichfalls geeignet sind.

Generelle Regeln für das Design von geeigneten polymeren Dispersionsstabilisatoren werden in "Keith. Barett, Dispersion Polymerization in Organic Media, John Wiley & Sons, London, 1975" auf den Seiten 45 bis 110 gegeben. Hauptanforderungen sind eine Löslichkeit des polymeren Dispersionsstabilisators in dem verwendeten Dispergiermedium, sowie polare oder reaktive Gruppen, die eine starke Wechselwirkung mit den zu dispergierenden Teilchen ermöglichen.

Bevorzugt werden für das erfindungsgemäße Verfahren amphiphile Copolymere oder oberflächenmodifizierte anorganische Verbindungen eingesetzt. Dies sind z.B. mit Trialkylammoniumsalzen oberflächenmodifizierte Schichtsilikate, insbesondere mit Trialkylammoniumsalzen oberflächenmodifiziertes Bentonit, oder amphiphile Copolymere aus einer polaren Polymereinheit, z.B. Poly-N-Vinylpyrrolidon und einer unpolaren Polymereinheit, z.B. langkettigen -Olefinen, beispielsweise 1-Eicosen.

Derartige amphiphile Copolymere werden von der Firma ISP Global unter dem Handelsnamen ®Antaron angeboten und haben sich als besonders geeignet erwiesen. Antaron wurde, wie z.B. in EP-B-0 392 285 beschrieben, auch bereits erfolgreich bei tieferen Temperaturen zur Stabilisierung von Polyurethan-Dispersionen eingesetzt. Es hat sich gezeigt, das Antaron aber auch vorteilhaft bei Temperaturen bis 300°C eingesetzt werden kann und eine ausgezeichnete Stabilität der Dispersionen ergibt.

Der Gehalt an Dispersionsstabilisator liegt erfindungsgemäß im Bereich von 0.1 bis 6 Gew.% bezogen auf die Polyester-Ausgangsstoffe, bevorzugt im Bereich von 0.3 bis 4 Gew.%, insbesondere im Bereich von 0.5 bis 2 % Gew.%, um Partikel mit der gewünschten Partikelgröße zu erhalten.

In einem anschließenden Schritt (b) wird die Reaktionsmischung weiter auf eine Temperatur im Bereich von 120 bis 250°C, insbesondere von 200 bis 250°C erhitzt, wobei die entstehenden Kondensationsnebenprodukte parallel abgeführt werden. Die Temperatur wird so lange beibehalten, bis der Polyester das gewünschte Molekulargewicht, das üblicherweise im Bereich von Mn= 500 bis 20 000 liegt, vorzugsweise im Bereich von 1000 bis 10 000, erreicht hat. Entscheidend für das Molekulargewicht ist die Dauer der Reaktion, die durch Probennahme verfolgt werden kann.

Zur Erhöhung der Funktionalität des Polyesters können für vernetzbare Systeme nach Erreichung des notwendigen Molekulargewichtes anschließend an Schritt (b) mehrfunktionelle Komponenten zugegeben werden.
Beispielsweise werden bei der gleichen Reaktionstemperatur mehrfunktionelle Carbonsäuren oder Alkohole wie z.B. Trimellitsäureanhydrid zugegeben und noch einige Zeit weiter erhitzt um einen Einbau der zudosierten Komponenten sicherzustellen.

Nach Abschluß der Kondensation in Schritt (b) können ferner zur Optimierung der Beschichtungseigenschaften des Polyesters, die für eine optimale Oberflächengüte der Beschichtungen aus Pulverlacken gewünscht ist, Additive wie z.B. Fließhilfsmittel oder Entgasungshilfsmittel zugegeben werden. Dazu kühlt man die Mischung auf 160 bis 200 °C ab und dosiert die gewünschten Additive unter gleichzeitigem Rühren der Reaktionsmischung zu.

Anschließend wird die Reaktionsmischung auf eine Temperatur im Bereich von 60 bis 140 °C, insbesondere von 80 bis 120 °C abgekühlt und im Fall eines vernetzbaren funktionellen Polyesters mindestens ein mehrfunktionelles Vernetzungsmittel oder ein Epoxidharz zugegeben. Durch dieses Verfahren gelingt es, die Vernetzungsreaktion soweit zu vermeiden, daß die aus den Pulvern erhaltenen Überzüge die üblichen Gelzeiten von 2 bis 5 Minuten bei der Einbrenntemperatur (z.B. 180°C) haben. Die erfindungsgemäßen Pulverlacke unterscheiden sich hinsichtlich der Einbrenntemperaturen und Gelzeiten nicht von herkömmlichen Systemen, die durch Extrusion und Mahlen erhalten werden.

Die erfindungsgemäßen Polyester können sowohl thermoplastisches Verhalten zeigen, als auch funktionelle Gruppen enthalten, die nachträglich vernetztbar sind.

Die Carboxylgruppen von funktionellen Polyestern können so beispielsweise mit Epoxiden vernetzt werden. Beispiele für übliche Zusammensetzungen solcher Polyester werden in folgender Monographie gegeben: "David A. Bate, "The science of powder coatings" Volume 1, SITA Technology, ISBN 0 947798005, die hiermit explizit genannt wird. Als typische Rohstoffe für funktionelle Polyester können beispielsweise folgende Dicarbonsäuren bzw. ihre niedermolekularen Ester eingesetzt werden: Terephthalsäure, Isophthalsäure, Adipinsäure, Sebacinsäure, Phthalsäure, Fumarsäure. Als Diolkomponente können beispielsweise Ethylenglycol, Diethylenglycol, Neopentylglycol, Hexandiol, Bis-Hydroxymethylxyclohexan eingesetzt werden.

Ein Überblick über gebräuchliche Vernetzungsmittel für funktionelle Polyester sowie notwendige Additive wie z.B. Fließverbesserer wird in der vorstehend genannten Literaturstelle gegeben. Beispiele für typische Vernetzer sind Triglycidylisocyanurat (®Araldite PT 810), Epoxidharze auf Basis von Bisglycidyl- Bisphenol A oder auch β -Hydroxyalkylamide (wie z.B.® Primid XL 552).

Der Gehalt an Vernetzungsmittel beträgt üblicherweise 2 bis 20 Gew.%, bevorzugt 5 bis 10 Gew.% bezogen auf den Polyesteranteil, kann aber für sogenannten Epoxy/Polyester Hybridsysteme bis auf 50 Gew.% ansteigen.

Nach Zugabe des Vernetzungsmittels wird die Temperatur der Reaktionsmischung auf eine Temperatur, die unterhalb der Erweichungstemperatur des Polyesters liegt, vorzugsweise < 60 °C, abgesenkt.

Der Polyester fällt hierbei in Pulverform an. Die erhaltenen kugelförmigen Polyesterpartikel werden von der überstehenden Reaktionslösung abgetrennt und gegebenenfalls gereinigt.

Die mit dem beschriebenen Verfahren erhaltenen Polyesterpartikel sind transparent und können mit beliebigem Molekulargewicht, z.B. im Bereich von Mn= 500 bis Mn = 50.000, hergestellt werden. Die Ausbeute beträgt > 98 %. Es gibt praktisch keine Anhaftungen im Reaktor, die zu einer Verminderung der Ausbeute führen würden.

Mit Hilfe des erfindungsgemäßen Verfahrens ist es möglich, kugelförmige Polyesterpartikel mit einer mittleren Partikelgröße (d50) < 50 µm, vorzugsweise < 40 µm, insbesondere < 30 µm, und einer monomodalen Partikelgrößenverteilung (d90-d10/d50) von ≤ 2,5, insbesondere ≤ 2,0, vorzugsweise ≤ 1.5 zu erhalten.

Ferner zeichnen sich die erhaltenen Polyesterpartikel dadurch aus, daß sie nach Applikation auf eine geeignete Oberfläche bei Temperaturen unterhalb 200°C, insbesondere bei Temperaturen im Bereich von 120 bis 200 °C, vorzugsweise 160 bis 200 °C, zu einem kontinuierlichen Überzug aufgeschmolzen werden können, der im Fall von vernetzbaren Polyestern bei diesen Temperaturen auch ausgehärtet werden kann.

Die erfindungsgemäßen kugelförmigen Polymerpartikel lassen sich aufgrund ihrer engen Partikelgrößenverteilung ausgezeichnet nach den üblichen Verfahren der Pulverlackbeschichtungstechnologie verarbeiten und ergeben Beschichtungen mit einer sehr guten Oberfläche. Im Vergleich zu konventionellen Pulvern, die üblicherweise eine Beschichtungsdicke von 50 bis 70 µm ergeben, gelingt es, mit Hilfe der hier beschriebenen Polyesterpulver Schichten mit Dicken < 50 µm, vorzugsweise Beschichtungen mit Dicken im Bereich von 5 bis 40 µm, insbesondere 10 bis 35 µm, herzustellen.

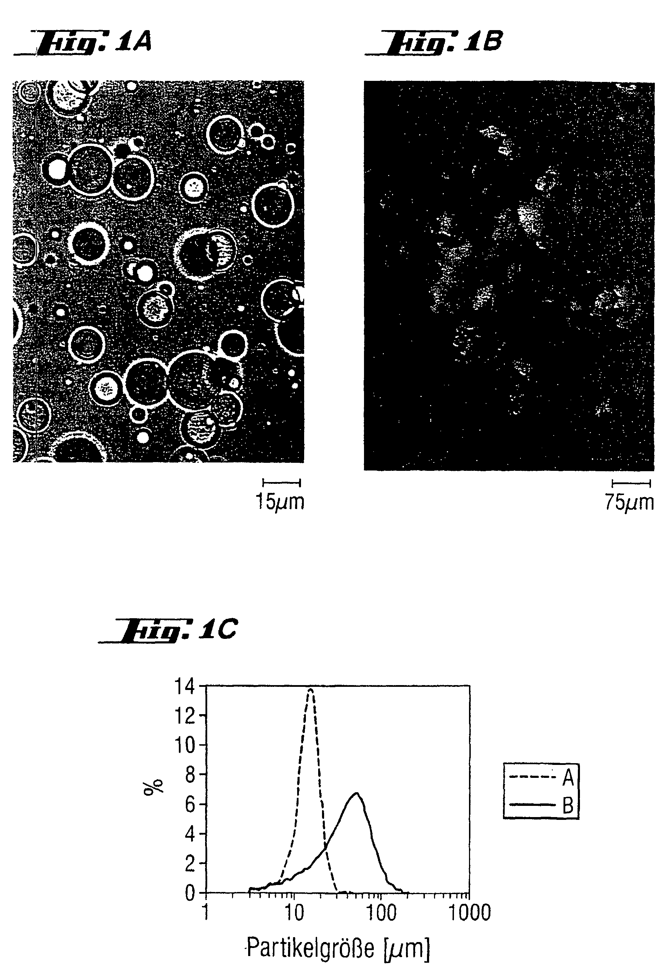

Die Figuren 1A, 1B, 1C zeigen einen Vergleich zwischen den erfindungsgemäßen Pulvern (Probe gemäß Fig. 1A, hergestellt nach Beispiel 4m) und nach dem Stand der Technik erhaltenen Mahlpulvern (Probe gemäß Fig. 1 B) sowie die entsprechenden Partikelgrößenverteilungen in Fig. 1C. Die Partikelgrößenverteilungen wurden durch Lichtstreuung mit einem Malvern Mastersizer ermittelt.

Die nachfolgenden Beispiele sollen die Erfindung verdeutlichen:

### Beispiel 1: Herstellung eines Oligomerengemisches als Ausgangsprodukt für vernetzbare Polyester

In einem 10l-Vierhalsrundkolben werden 4090 g Dimethylterephthalat (21,06 mol), 888,4 g Dimethylisophthalat (4,58 mol), 2814 g Neopentylglykol (27,05 mol) und 1,5 g Mangan(II)acetat *4 Wasser als Katalysator eingewogen. Der Kolben wird mit einer Füllkörperkolonne (I=10 cm) mit Destillationsbrücke verbunden. Die Reaktionsmischung wird nun unter Schutzgas auf 150 °C gebracht. Bei dieser Temperatur liegen alle Monomere als Schmelze vor. Gleichfalls setzt bei dieser Temperatur die Veresterung ein. Die Temperatur wird so gesteuert, daß die Kopftemperatur 75 °C nicht übersteigt. Innerhalb von 4h wird die Innentemperatur von 150 °C auf 225 °C erhöht, um das gebildete Methanol möglichst vollständig aus der Reaktionsmischung zu entfernen.
Es werden 6181,1 g Oligomerengemisch, das bei Raumtemperatur zu einer glasartigen, klaren Masse erstarrt und 1638,8 g Methanol (theoretisch: 1640 g Methanol) isoliert.

### Beispiel 2: Herstellung von transparenten vernetzbaren Polyesterpulvern

In einem 1l-Reaktor mit Wasserabscheider werden 300 g des Oligomerengemisches aus Beispiel 1, 240 g Isopar P (Exxon Chemical) und 60 g Isopar L als Wärmeträgeröl, 117 mg Antimontrioxid als Veresterungskatalysator und als Dispersionsstabilisator ®Antaron V 220 (Menge siehe Tabelle 1) eingewogen. Die Reaktionsmischung wird unter Schutzgas (Brandgefahr durch niedrige Zündtemperatur der Wärmeträgeröle) auf eine Innentemperatur von 240 °C erhitzt. Bei ca. 230 °C beginnt die Destillation von Wärmeüberträgeröl und Neopentylglykol (t = 0 min).
Man destilliert 30 Minuten (Rührergeschwindigkeit: 2000 UpM) und setzt dann zur Erhöhung der Funktionalität an Carboxylgruppen in der Siedehitze 21,88 g Trimellitsäureanyhdrid (0,114 mol) zu. Für weitere 40 Minuten hält man die Reaktionsmischung unter Siedehitze wobei eine geringe Menge Wasser abdestilliert. Anschließend wird unter Rühren abgekühlt.
Bei 180 °C setzt man die Additive Benzoin (1,2 g) und Byk 360 P (BYK Chemie) (4,5 g) zu. Nach weiterem Abkühlen wird bei 100 °C 21 g Triglycidylisocyanurat (TGIC) als Vernetzungsmittel zugesetzt. Nachdem die Reaktionsmischung auf 35 °C abgekühlt worden ist, wird die Reaktionsmischung filtriert und zur Entfernung des Wärmeüberträgers das Polyesterpulver fünfmal mit Isohexan gewaschen. Nach dreistündigem Trocknen bei 30 °C/0,1 mbar werden 336 g Pulverlack isoliert. Mikroskopische Aufnahmen zeigen die Ausbildung von sphärischen Partikeln (s. Abbildung 1).

Die Abhängigkeit der Partikelgröße vom Dispersionsstabilisatorgehalt ist in Tabelle 1 aufgeführt. Eine Erhöhung des Dispersionsstabilisatorgehaltes führt üblicherweise zu einer Herabsetzung der Partikelgröße.

**Tabelle 1:**

| Dispergatorgehalt der Reaktionsmischung, Partikelgröße und Span der erhaltenen Pulver sowie eine typische Schichtdicke einer Pulverlackbeschichtung aus dem Pulver. | | | | |
|---|---|---|---|---|
| Probenbezeichnung | Dispergatorgehalt (Antaron V 220) [%] | Partikelgröße (d50) [µm] | Span (d90-d10/d50) | Filmdicke [µm] |
| 2a | 0,45 | 34 | 1,3 | 29 |
| 2b | 0,9 | 22 | 1,4 | 19 |
| 2c | 1,3 | 12 | 1,4 | 15 |
| 2d | 1,8 | 8 | 1,4 | 12 |

Die erhaltenen Pulver besitzen bei 180 °C eine Gelzeit von 2-5 Minuten.

Die Pulver wurden sowohl mit Hilfe einer Tribopistole als auch mit einer Corona-Pistole auf Aluminiumbleche von 950 µm Dicke aufgesprüht. Anschließend wurde das Material bei 180 °C für 20 Minuten ausgehärtet. Die erhaltenen Schichtdicken sind in Tabelle 1 aufgeführt.

### Beispiel 3: Herstellung eines Oligomerengemisches als Ausgangsprodukt für thermoplastische Polyester

In einem 10l-Vierhalsrundkolben werden 2475 g Dimethylterephthalat (12.75 mol), 2250 g Dimethylisophthalat (11,59 mol), 450 g Neopentylglykol (4,33 mol), 2500 g Ethylenglykol (40,28 mol), 252 g Diethylenglykol (2,37 mol) und 1,485 g Mangan(II)acetat *4 Wasser eingewogen.
Unter Schutzgas wird die Reaktionsmischung auf eine Temperatur von 150 °C erwärmt. Bei dieser Temperatur sind alle Monomere aufgeschmolzen. Über eine Füllkörperkolonne (I = 10 cm) mit Destillationsbrücke wird das gebildete Methanol abdestilliert. Die Temperatur wird so gesteuert, daß die Kopftemperatur 75 °C nicht übersteigt. Es wird bis zu einer Reaktionsmischungstemperatur von 225 °C erwärmt, um das Methanol möglichst vollständig aus der Reaktionsmischung zu entfernen.
Es wurden 1555 g Methanol (theoretisch 1557 g) abdestilliert. Nach dem Abkühlen auf Raumtemperatur wurden 6240 g hochviskoses Oligomerengemisch erhalten.

### Beispiel 4: Herstellung transparenter thermoplastischer Polyesterpulver für die Verwendung als Pulverlacke

In einem 1l-Reaktor mit Wasserabscheider werden 400 g Oligomerengemisch aus Beispiel 3, die Wärmeüberträgeröle Isopar P und / oder Isopar L (Einwaagen s. Tabelle 2) sowie Antaron V 220 als Dispersionsstabilisator (Einwaage s. Tabelle 2) und 100 mg Antimontrioxid als Umesterungskatalysator eingewogen. Der Reaktor wird mit einem Wasserabscheider verbunden. Anschließend wird die Reaktionsmischung unter Inertgas auf eine Innentemperatur von 200 bis 240 ° C (siehe Tabelle 2) erhitzt. Etwa 20 °C unterhalb des Siedepunktes des Wärmeüberträgers beginnt die Destillation (t = 0 min). Es wird 4h bei der Siedetemperatur des Wärmeträgeröls (siehe Tabelle2) destilliert. Dabei werden ca. 82 ml eines Gemisches aus Ethylenglykol, Neopentylglykol und Diethylenglykol durch azeotrope Destillation mit dem Wärmeüberträger abdestilliert. Die Hauptmenge des Destillates besteht aus Ethylengylycol.

Das Polyesterpulver wird durch Filtration vom Wärmeüberträgeröl getrennt. Zur Entfernung von anhaftendem Wärmeüberträgeröl werden die Polyesterpartikel dreimal mit Isohexan gewaschen und anschließend bei 30 °C/0,1 mbar für 3h getrocknet.

**Tabelle 2:**

| Reaktionsbedingungen, Partikelgröße, Partikelgrößenverteilung für thermoplastische Polyesterpulver sowie Filmdicke der daraus erhaltenen transparenten Überzüge. | | | | | | | |
|---|---|---|---|---|---|---|---|
| Probenbezeichnung | Dispergator gehalt [%] | Masse Wärmeträgeröl [g] | Verhältnis Isopar P/L [Gew%] | Reaktionstemperatur [°C] | Partikelgröße d50 [µm] | Span | Filmdicke [µm] |
| 4a | 1 | 488 | 50/50 | 220 | 10,8 | 2,25 | 14 |
| 4b | 0,5 | 266 | 0/100 | 200 | 19,3 | 1,42 | 23 |
| 4c | 1 | 488 | 50/50 | 220 | 13,7 | 2,1 | 17 |
| 4d | 1,5 | 933 | 80/20 | 240 | 16,6 | 2,1 | 19 |
| 4e | 1,5 | 266 | 80/20 | 240 | 12,4 | 2,4 | 15 |
| 4f | 1 | 488 | 50/50 | 220 | 14,4 | 2,16 | 17 |
| 4g | 0,5 | 933 | 80/20 | 240 | 42 | 1,39 | 51 |
| 4h | 0,5 | 933 | 0/100 | 200 | 32,1 | 1,35 | 38 |
| 4i | 0,5 | 266 | 80/20 | 240 | 29,1 | 1,84 | 35 |
| 4j | 1,5 | 266 | 0/100 | 200 | 7,62 | 1,51 | 11 |
| 4k | 1,5 | 266 | 0/100 | 200 | 7,33 | 1,8 | 10 |
| 4l | 0,5 | 266 | 80/20 | 240 | 24,5 | 1,54 | 29 |
| 4m | 0,5 | 750 | 0/100 | 200 | 14,8 | 1,14 | 16 |

Die Pulver wurden mittels Tribo-Pistole und Corona Pistole auf Eisenbleche von 950 µm Stärke aufgesprüht. Zum Erhalt einer gleichmäßigen Oberfläche wurden die Beschichtungen anschließend fünf Minuten bei 190 °C aufgeschmolzen. Es wurden hochglänzende transparente Filmüberzüge ohne Krater erhalten (Filmdicken s. Tabelle 2). Auch die feinen Pulver ließen sich ohne Probleme nach den üblichen Sprühverfahren für Pulverlacke verarbeiten.

### Beispiel 5: Herstellung eines Epoxy-Polyester Hybrid Pulverlacks

In Analogie zu Beispiel 2 wird eine Polyesterdispersion mit Additiven und 1% Antaron V 220 hergestellt. Anstelle von TGIC gibt man bei 100°C 600g einer 50% igen Dispersion des Epoxids Typ 3003 der Shell AG in Isopar L als Dispersionsmedium, die mit 1% Antaron V 220 stabilisiert ist, zu. Eine solche Dispersion wird bereits durch kurzzeitiges Erhitzen einer Mischung aller Komponenten auf 100°C unter Rühren erhalten. Nach 10 min bei 100°C läßt man das System auf Raumtemperatur abkühlen und isoliert das Pulver wie in Beispiel 2 beschrieben.

Man erhält 600g eines Pulverlacks mit einer mittleren Partikelgröße von 25µ, einem Span von 2,0, und einer Gelzeit von 4 min bei 180 °C.
Aus dem Pulver wird eine defektfreie Beschichtung von 20 µ Schichtstärke mit hohem Glanz erhalten.

### Beispiel 6: Herstellung eines Pulverlacks mit ®Primid als Vernetzer

Analog zu Beispiel 2 wird eine Polyesterdispersion unter Verwendung von 0,9 % ®Antaron V 220 hergestellt. Nach Zugabe der Additive bei 180 °C wird die Mischung auf 125 °C abgekühlt und bei dieser Temperatur 16,5 g ®Primid XL 552 zugegeben. Nach Abkühlen auf Raumtemperatur, Filtration und Entfernung von Rückständen des Wärmeträgeröls durch Waschen mit Isohexan wird ein farbloses Pulver mit einer mittleren Korngröße von 21 µm isoliert. Die Ausbeute beträgt > 98 %.

Das Pulver wird analog zu Beispiel 2 zu einer defektfreien, transparenten Beschichtung mit einer Schichtdicke von 23µm verarbeitet.

## Patentansprüche

1. Polyesterpartikel mit einer mittleren Partikelgröße < 50µm **dadurch gekennzeichnet, daß** die Polymerpartikel kugelförmig und transparent sind, eine monomodale Partikelgrößenverteilung mit einem Span (d90-d10/d50) <2,5 besitzen, bei Temperaturen <200°C zu einem kontinuierlichen Überzug aufgeschmolzen werden können.

2. Polyesterpartikel nach Anspruch 1, **dadurch gekennzeichnet, daß** sich mit ihnen Beschichtungen mit einer Dicke < 50µm herstellen lassen.

3. Polyesterpartikel nach Anspruch 1 und/oder 2, **dadurch gekennzeichnet, daß** diese Einheiten der Formeln (1) und (2) enthalten
-CO-X-CO (1)
-O-D-O- (2)
wobei
X für einen substituierten oder unsubstituierten C₆ bis C₁₄ - aromatischen Rest oder einen Alkylen-, Polymethylen-, Cycloalkan-, Dimethylencycloalkangruppe oder eine geradkettige oder verzweigt, gegebenenfalls ungesättigte Alkandiyl-Gruppe steht und
D eine Alkylen-, Polymethylen-, Cycloalkan-, Dimethylencycloalkangruppe oder eine geradkettige oder verzweigte, gegebenenfalls ungesättigte Alkandiyl-Gruppe bedeutet.

4. Polyesterpartikel nach mindestens einem der Ansprüche 1 bis 3, **dadurch gekennzeichnet, daß** sie ein Molekulargewicht Mn im Bereich von 500 bis 50.000 besitzen.

5. Verwendung der Polyesterpartikel nach mindestens einem der Ansprüche 1 bis 4 für Pulverlackbeschichtungen.

6. Verfahren zur Herstellung von kugelförmigen, transparenten, gegebenenfalls vernetzbaren Polyesterpartikeln
a. durch Dispergieren der Ausgangsstoffe für ein Polyesterbindemittel in Form von Oligoestern, die eine Viskosität von weniger als 1000 mPas (gemessen bei 200°C) besitzen, in einem inerten hochsiedenden Wärmeträger bei einer Temperatur, die mindestens so hoch ist wie die Erweichungstemperatur der Ausgangsstoffe in Gegenwart mindestens eines polymeren Dispersionsstabilisators und
b. anschließendes Erhitzen der Reaktionsmischung auf eine Temperatur im Bereich von 120 bis 250°C, unter gleichzeitiger Abführung der Kondensationsnebenprodukte, bis der Polyester das gewünschte Molekulargewicht besitzt,
c. die Reaktionsmischung im Falle eines vernetzbaren funktionellen Polyesters danach auf eine Temperatur im Bereich von 60 bis 140°C abkühlt und mindestens ein mehrfunktionelles Vernetzungsmittel oder Epoxidharz zugibt und
d. anschließend die Temperatur in einen Bereich, der unterhalb der Erweichungstemperatur des Polyester liegt absenkt und die erhaltenen kugelförmigen Polyesterpartikel abtrennt.

7. Verfahren nach Anspruch 6, **dadurch gekennzeichnet, daß** die eingesetzten Ausgangsstoffe Einheiten der Formeln (1) und (2) enthalten
-CO-X-CO (1)
-O-D-O (2)
wobei
X für einen substituierten oder unsubstituierten C₆ bis C₁₄ -aromatischen Rest oder eine Alkylen- Polymethylen- Cycloalkan- Dimethylencycloalkangruppe oder eine geradkettige oder verzweigte, gegebenenfalls ungesättigte Alkandiyl-Gruppe steht und
D eine Alkylen-, Polymethylen, Cycloalkan-, Dimethylencycloalkangruppe oder eine geradkettige oder verzweigte, gegebenenfalls ungesättigte Alkandiyl-Gruppe bedeutet.

8. Verfahren nach mindestens einem der Ansprüche 6 bis 7, **dadurch gekennzeichnet, daß** die Ausgangstoffe in Schritt (a.) auf eine Temperatur im Bereich von 150 bis 250°C erhitzt werden.

9. Verfahren nach mindestens einem der Ansprüch 6 bis 8, **dadurch gekennzeichnet, daß** der verwendete Wärmeträger einen Siedepunkt im Bereich von 150 bis 300°C besitzt.

10. Verfahren nach mindestens einem der Ansprüche 6 bis 9, **dadurch gekennzeichnet, daß** der Gehalt an Dispersionsstabilisator im Bereich von 0,1 bis 6 Gew.% bezogen auf die Polyester-Ausgangsstoffe, beträgt.

11. Verfahren nach mindestens einem der Ansprüche 6 bis 10, **dadurch gekennzeichnet, daß** als Dispersionsstabilisator ein amphiphiles Copolymer eingesetzt wird.

12. Verfahren nach mindestens einem der Ansprüche 6 bis 11, **dadurch gekennzeichnet, daß** als Dispersionsstabilisator ein Poly(Vinylpyrrolidon/1-Eicosen) eingesetzt wird.

13. Verfahren nach mindestens einem der Ansprüche 6 bis 12, **dadurch gekennzeichnet, daß** anschließend an Schritt (b) nach Erreichung des gewünschten Molekulargewichtes zur Erhöhung der Funktionalität des Polyesters mehrfunktionelle Komponenten zugegeben werden.

14. Verfahren nach mindestens einem der Ansprüche 6 bis 13, **dadurch gekennzeichnet, daß** nach Abschluß der Kondensation in Schritt (b) die Reaktionsmischung auf 160°C bis 200°C abgekühlt wird und zur Optimierung der Beschichtungseigenschaften des Polyesters entsprechende Additive zugegeben werden.

15. Verfahren nach mindestens einem der Ansprüche 6 bis 14, **dadurch gekennzeichnet, daß** die erhaltenen Polyester ein Molekulargewicht Mn im Bereich von 500 bis 50.000 aufweisen.

16. Verfahren nach mindestens einem der Ansprüche 6 bis 15, **dadurch gekennzeichnet, daß** die Polyesterpartikel in Pulverform anfallen.

17. Verfahren nach mindestens einem der Ansprüche 6 bis 16, **dadurch gekennzeichnet, daß** die erhaltenen Polyesterpartikel eine monomodale Partikelgrößenverteilung (d90-d10/d50) von ≤ 2,5 besitzen.

18. Verfahren nach mindestens einem der Ansprüche 6 bis 17, **dadurch gekennzeichnet, daß** sich mit den erhaltenen Polyesterpartikeln Pulverlackbeschichtungen mit einer Beschichtungsdicke < 50 µm herstellen lassen.

19. Kugelförmige Polyesterpartikel mit einer mittleren Partikelgröße < 50 µm und einer monomodalen Partikelgrößenverteilung mit einem Span (d90-d10/d50) <2,5, **dadurch gekennzeichnet, daß** sie mit einem Verfahren nach einem oder mehreren der Ansprüche 6 bis 18 hergestellt wurden.

## Claims

1. Polyester particles having an average particle size of <50 µm, **characterised in that** the polymer particles are spherical and transparent, have a monomodal particle size distribution with a span (d90-d10/d50) of <2.5 and may be fused at temperatures of <200°C to yield a continuous coating.

2. Polyester particles according to claim 1, **characterised in that** coatings of a thickness of <50 µm may be produced therewith.

3. Polyester particles according to claim 1 and/or 2, **characterised in that** they contain units of the formulae (1) and (2)
-CO-X-CO (1)
-O-D-O- (2)
wherein
X denotes a substituted or unsubstituted C₆ to C₁₄ aromatic residue or an alkylene, polymethylene, cycloalkane, dimethylenecycloalkane group or a linear or branched, optionally unsaturated alkanediyl group and
D means an alkylene, polymethylene, cycloalkane, dimethylenecycloalkane group or a linear or branched, optionally unsaturated alkanediyl group.

4. Polyester particles according to at least one of claims 1 to 3, **characterised in that** they have a molecular weight Mn in the range from 500 to 50000.

5. Use of the polyester particles according to at least one of claims 1 to 4 for powder coatings.

6. A process for the production of spherical, transparent, optionally cross-linkable polyester particles
a. by dispersing the starting materials for a polyester binder in the form of oligoesters, which have a viscosity of less than 1000 mPas (measured at 200°C), in an inert, high-boiling heat-transfer medium at a temperature which is at least as high as the softening temperature of the starting materials in the presence of at least one polymeric dispersion stabiliser and
b. subsequently heating the reaction mixture to a temperature in the range from 120 to 250°C with simultaneous removal of the secondary products of condensation until the polyester has the desired molecular weight,
c. then, in the case of a cross-linkable functional polyester, cooling the reaction mixture to a temperature in the range from 60 to 140°C and adding at least one polyfunctional cross-linking agent or epoxy resin and
d. subsequently reducing the temperature to a range which is below the softening temperature of the polyester and separating the spherical polyester particles obtained.

7. A process according to claim 6, **characterised in that** the starting materials used contain units of the formulae (1) and (2)
-CO-X-CO (1)
-O-D-O- (2)
wherein
X denotes a substituted or unsubstituted C₆ to C₁₄ aromatic residue or an alkylene, polymethylene, cycloalkane, dimethylenecycloalkane group or a linear or branched, optionally unsaturated alkanediyl group and
D means an alkylene, polymethylene, cycloalkane, dimethylenecycloalkane group or a linear or branched, optionally unsaturated alkanediyl group.

8. A process according to at least one of claims 6 to 7, **characterised in that** the starting materials are heated to a temperature in the range from 150 to 250°C in step (a).

9. A process according to at least one of claims 6 to 8, **characterised in that** the heat-transfer medium used has a boiling point in the range from 150 to 300°C.

10. A process according to at least one of claims 6 to 9, **characterised in that** the content of dispersion stabiliser is in the range from 0.1 to 6 wt.%, relative to the polyester starting materials.

11. A process according to at least one of claims 6 to 10, **characterised in that** an amphiphilic copolymer is used as the dispersion stabiliser.

12. A process according to at least one of claims 6 to 11, **characterised in that** a poly(vinylpyrrolidone/ 1-eicosene) is used as the dispersion stabiliser.

13. A process according to at least one of claims 6 to 12, **characterised in that**, subsequently to step (b) once the desired molecular weight has been achieved, polyfunctional components are added to increase the functionality of the polyester.

14. A process according to at least one of claims 6 to 13, **characterised in that**, after completion of the condensation in step (b), the reaction mixture is cooled to 160°C to 200°C and appropriate additives are added to optimise coating properties.

15. A process according to at least one of claims 6 to 14, **characterised in that** the polyesters obtained exhibit a molecular weight Mn in the range from 500 to 50000.

16. A process according to at least one of claims 6 to 15, **characterised in that** the polyester particles are obtained in powder form.

17. A process according to at least one of claims 6 to 16, **characterised in that** the polyester particles obtained have a monomodal particle size distribution (d90 - d10/d50) of ≤ 2.5.

18. A process according to at least one of claims 6 to 17, **characterised in that** the polyester particles obtained are used to produce powder coatings of a thickness of < 50 µm.

19. Spherical polyester particles having an average particle size of < 50 µm and a monomodal particle size distribution with a span (d90 - d10/d50) of < 2,5, **characterised in that** they are produced with a process according to one or more of the claims 6 to 18.

## Revendications

1. Particules de polyester ayant une dimension de particule moyenne < 50 µm, **caractérisées en ce que** les particules polymères ont une forme en bille et sont transparentes, qu'elles présentent une répartition granulométrique monomodale avec un intervalle (d90-d10/d50) < 2,5 et qu'elles peuvent être fondues en un revêtement continu en présence de températures < 200°C.

2. Particules de polyester selon la revendication 1, **caractérisées en ce qu'**elles permettent de produire des revêtements d'une épaisseur < 50 µm.

3. Particules de polyester selon les revendications 1 et/ou 2, **caractérisées en ce qu'**elles contiennent les unités des formules (1) et (2)
-CO-X-CO (1)
-O-D-O- (2)
où
X représente un résidu aromatique C₆ à C₁₄ substitué ou non substitué ou un groupe alkylène, polyméthylène, cycloalcane, diméthylènecycloalcane ou un groupe alcanediyle à chaîne droite ou ramifiée, éventuellement non saturé, D représentant un groupe alkylène, polyméthylène, cycloalcane, diméthylènecycloalcane ou un groupe alcanediyle à chaîne droite ou ramifiée, éventuellement non saturé.

4. Particules de polyester selon au moins une des revendications 1 à 3, **caractérisées en ce qu'**elles ont un poids moléculaire Mn compris dans l'intervalle allant de 500 à 50.000.

5. Utilisation de particules de polyester selon au moins une des revendications 1 à 4 pour des revêtements en poudre.

6. Procédé de production de particules de polyester en forme de billes, transparentes, éventuellement réticulable, comportant les étapes ci-dessous:
a. dispersion des substances de départ pour un liant de polyester sous forme d'oligo-esters, ayant une viscosité inférieure à 1000 mPas (mesurée à 200°C), dans un agent caloporteur inerte à point d'ébullition élevé en présence d'une température correspondant au moins à la température de ramollissement des substances de départ en présence d'au moins un stabilisateur de dispersion polymère et
b. échauffement ultérieur du mélange de réaction à une température comprise dans l'intervalle allant de 120 à 250°C, avec évacuation simultanée des produits auxiliaires de condensation, jusqu'à ce que le polyester possède le poids moléculaire voulu,
c. refroidissement ultérieur du mélange de réaction, dans le cas d'un polyester fonctionnel réticulable, à une température comprise entre 60 et 140°C, et addition d'au moins un agent de réticulation multifonctionnel ou d'une résine époxyde, et
d. abaissement ultérieur de la température dans un intervalle situé au-dessous de la température de ramollissement du polyester et séparation des particules de polyester en forme de billes produites.

7. Procédé selon la revendication 6, **caractérisé en ce que** les substances de départ utilisées contiennent des unités des formules (1) et (2)
-CO-X-CO (1)
-O-D-O- (2)
où
X représente un résidu aromatique C₆ à C₁₄ substitué ou non substitué ou un groupe alkylène, polyméthylène, cycloalcane, diméthylènecycloalcane ou un groupe alcanediyle à chaîne droite ou ramifiée, éventuellement non saturé, D représentant un groupe alkylène, polyméthylène, cycloalcane, diméthylènecycloalcane ou un groupe alcanediyle à chaîne droite ou ramifiée, éventuellement non saturé.

8. Procédé selon au moins une des revendications 6 à 7, **caractérisé en ce que** les substances de départ sont échauffées lors de l'étape (a) à une température comprise entre 150 et 250°C.

9. Procédé selon au moins une des revendications 6 à 8, **caractérisé en ce que** l'agent caloporteur utilisé présente un point d'ébullition compris entre 150 et 300°C.

10. Procédé selon au moins une des revendications 6 à 9, **caractérisé en ce que** la teneur en stabilisateur de dispersion est comprise dans l'intervalle allant de 0,1 à 6% en poids par rapport aux substances de départ du polyester.

11. Procédé selon au moins une des revendications 6 à 10, **caractérisé en ce qu'**on utilise comme stabilisateur de dispersion un copolymère amphiphile.

12. Procédé selon au moins une des revendications 6 à 11, **caractérisé en ce qu'**on utilise comme stabilisateur de dispersion un poly(vinylpyrrolidone/2Eicosen).

13. Procédé selon au moins une des revendications 6 à 12, **caractérisé en ce qu'**après l'étape (b), après l'établissement du poids moléculaire voulu, on ajoute des composants multifonctionnels en vue d'accroître la capacité fonctionnelle du polymère.

14. Procédé selon au moins une des revendications 6 à 13 **caractérisé en ce qu'**après l'achèvement de la condensation lors de l'étape (b), le mélange de réaction est refroidi à une température comprise entre 160°C et 200°C, des additifs correspondants étant ajoutés en vue d'optimiser les propriétés de revêtement du polyester.

15. Procédé selon au moins une des revendications 6 à 14 **caractérisé en ce que** les polyesters produits ont un poids moléculaire Mn compris dans l'intervalle allant de 500 à 50.000.

16. Procédé selon au moins une des revendications 6 à 15 **caractérisé en ce que** les particules de polyester se présentent sous forme de poudre.

17. Procédé selon au moins une des revendications 6 à 16 **caractérisé en ce que** les particules de polyester produites présentent une répartition granulométrique monomodale (d90-d10/d50) ≤ 2,5.

18. Procédé selon au moins une des revendications 6 à 17 **caractérisé en ce que** les particules de polyester produites permettent de produire des revêtements en poudre avec une épaisseur de revêtement < 50 µm.

19. Particules de polyester en forme de billes ayant une dimension de particule moyenne < 50 µm et une répartition granulométrique monomodale avec un intervalle (d90-d10/d50) ≤ 2,5, **caractérisées en ce qu'**elles sont produites par un procédé selon l'une ou plusieurs des revendications 6 à 18.
